# EUROPEAN PATENT SPECIFICATION

(11) **EP 3 995 426 B1**
(45) Date of publication and mention of the grant of the patent: **14.02.2024**
(21) Application number: 20306328.4
(22) Date of filing: 05.11.2020
(51) Int. Cl.: B66B 1/34

(54) **ELEVATOR POSITION REFERENCE SYSTEMS AND MONITORING BUILDING SETTLEMENT USING AN ELEVATOR POSITION REFERENCE SYSTEM**
AUFZUGSPOSITIONREFERENZSYSTEME UND ÜBERWACHUNG DER GEBÄUDEABRECHNUNG UNTER VERWENDUNG EINES AUFZUGSPOSITIONREFERENZSYSTEMS
SYSTÈMES DE RÉFÉRENCE DE POSITION D'ASCENSEUR ET SURVEILLANCE D'AFFAISSEMENT DE BÂTIMENTS À L'AIDE D'UN SYSTÈME DE RÉFÉRENCE DE POSITION D'ASCENSEUR

(43) Date of publication of application: 11.05.2022
(73) Proprietor: Otis Elevator Company, Farmington, Connecticut 06032 (US)
(72) Inventor: Sirigu, Gérard c/o OTIS Gien, 45505 Gien (FR); Rebillard, Pascal c/o OTIS Gien, 45505 Gien (FR); Fauconnet, Aurélien c/o OTIS Gien, 45505 Gien (FR)
(74) Representative: Dehns

(56) References cited:
- EP-A1- 2 657 171
- WO-A1-81/02288
- US-A- 3 856 116
- US-A1- 2003 070 883

## Description

### Technical field

This disclosure relates to an elevator position reference system, which determines the position of a component in an elevator hoistway using a position reference or measurement tape positioned along the elevator hoistway. This disclosure further relates to a method of using such an elevator position reference system to determine information related to, or indicative of, building settlement.

### Background

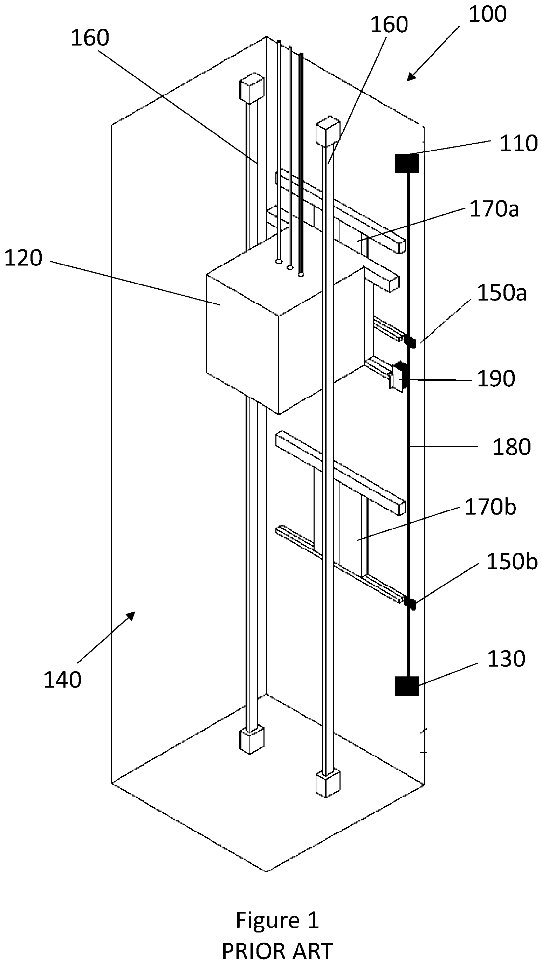

It is known to provide an elevator hoistway with a length of tape, arranged to extend vertically in the hoistway, and fixedly fastened at each end to the hoistway wall. This prior art arrangement is described in greater detail below with reference to Figure 1. The elevator car includes a sensor e.g. a camera, able to sense certain features e.g. incremental markings, along the length of the tape, and the sensed features are used to determine the position of the elevator car within the hoistway.

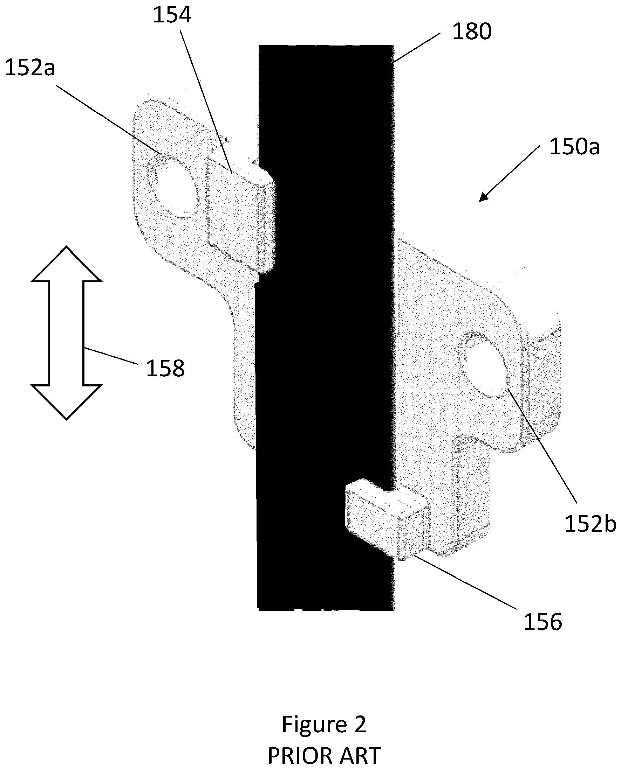

It is also known to fasten static clips to the building, along the length of the hoistway, and pass the tape through these clips, such that movement of the tape at each of these clips is restricted in a horizontal direction. These clips allow free vertical movement of the tape through the clips. An example of such a clip is shown in Figure 2, and described in greater detail below.

The accuracy and repeatability of position measurements in an elevator position reference system may depend on elongation phenomena affecting the tape due to temperature variations in the hoistway. Furthermore, readings taken from a position reference tape mounted in the hoistway can be affected by any movement of the building, for example due to an earthquake, long-term building settlement, or subsidence. Such factors, if left uncorrected, can have an impact on elevator car position measurement and hence stopping accuracy.

US3856116 discloses an elevator system according to the preamble of claim 1, comprising a control mechanism for an elevator car that includes translating devices and tape mounted cams.

Certain drawbacks with such known position measurement tape arrangements have been appreciated and the elevator position reference system according to the present disclosure seeks to address these shortcomings. It is a further aim of the present disclosure to provide a method of monitoring building settlement using an elevator position reference system.

### Summary

According to a first aspect of this disclosure there is provided an elevator position reference system, comprising:
a hoistway extending in a vertical direction;
a first position measurement tape arranged in the hoistway to extend along a portion of the hoistway in the vertical direction;
an upper tensioning device, connected to an upper end of the first position measurement tape so as to apply a tensioning force to the first position measurement tape in the upwards vertical direction, wherein a lower end of the first position measurement tape is fixed within the hoistway;
a second position measurement tape arranged in the hoistway to extend along at least some of said portion of the hoistway in the vertical direction; and
a lower tensioning device, connected to a lower end of the second position measurement tape so as to apply a tensioning force to the second position measurement tape in the downwards vertical direction, wherein an upper end of the second position measurement tape is fixed within the hoistway.

By providing two position measurement tapes, tensioned in opposite directions, readings can be taken from each position measurement tape and these readings can be combined in such a way as to provide an absolute position measurement value with improved accuracy. Thermal elongation of each tape will extend the tape in opposite directions, due to their opposite tensioning, so that the effect of thermal elongation can be removed by combining these values, giving a more accurate absolute position value. This helps to improve the stopping accuracy of elevator components e.g. an elevator car, which uses this position reference system. Furthermore, the Applicant has recognised that readings from the two position measurement tapes can also provide useful information indicative of building settlement or compression. The provision of two position measurement tapes also provides redundancy. The arrangement of two oppositely tensioned position measurement tapes in this position reference system makes it particularly suitable for use in high rise elevator systems e.g. > 150 m tall, in which it is still able to provide accurate absolute position and/or building settlement information.

The first and second position measurement tapes need not be identical, and similarly the upper and lower tensioning devices could be different and could provide different tensioning forces, provided that the differences between these can be predicted and/or calculated so that position measurements made using each tape can be calibrated.

In some embodiments, the first position measurement tape and the second position measurement tape have substantially similar, and preferably identical, thermal elongation properties, so that each tape will extend by the same amount, albeit in opposite directions due to tensioning. In some examples the first position measurement tape and the second position measurement tape are made of the same material. This is a simple solution to help the position measurement tapes have thermal elongation properties which are as similar as possible.

The first position measurement tape is arranged in the hoistway to extend along a portion of the hoistway in the vertical direction, with the second position measurement tape extending along at least some of the same portion. It will be understood that a portion of the hoistway refers to a particular vertical extent i.e. vertical section of the hoistway, e.g. including the total number of walls of the hoistway in that vertical extent e.g. including all four walls. The first and second position measurement tapes can be located at any suitable position within the particular vertical portion i.e. the extension over the same portion requires only that they are both present within the same vertical extent, but not that there is any particular physical relationship between them.

Thus, the position measurement tapes need not be directly next to one another i.e. alongside, they could be arranged on opposite walls of the hoistway. However, in some examples the first position measurement tape and the second position measurement tape are arranged along the same wall of the hoistway e.g. to extend alongside each other.

In
some examples, for the majority of the at least some of said portion of the hoistway, along which both the first and second position measurement tapes extend (optionally for all of said portion), the first position measurement tape and the second position measurement tape are less than 1 m apart, optionally less than 50 cm, further optionally less than 10 cm, further optionally less than 5 cm apart. Locating the position measurement tapes close together helps to ensure that they experience the same building conditions e.g. substantially the same thermal environment, and also enables the possibility of taking readings of both position measurement tapes using either a single sensor, or two sensors within the same sensor housing or mount, for improved convenience.

In
some examples the first position measurement tape and the second position measurement tape are located more than a minimum distance apart e.g. more than 1 cm, optionally more than 2 cm, further optionally more than 5 cm, further optionally more than 10 cm apart. This helps to prevent any interference between the tapes either physically or measurement interference e.g. reflectance, during measurement by the sensor(s).

The first position measurement tape is arranged in the hoistway to extend along a portion of the hoistway in the vertical direction, with the second position measurement tape extending along at least some of said portion. In some examples, the second position measurement tape extends along all of said portion. The first position measurement tape and/or the second portion may extend beyond said portion. Alternatively, said portion may be the entire extent of the first position measurement tape and/or the second position measurement tape. Thus, in some examples the first position measurement tape and the second position measurement tape are substantially the same length, optionally both extending along substantially the same vertical extent e.g. the ends of the first and second position measurement tapes are located respectively at the same heights within the hoistway. It will be understood that being the "same" length and at the "same" heights, encompasses the possibility of being offset by a small amount e.g. a few cm, since this would not affect the ability of the position measurement tapes to fulfil their functions.

In
some examples the first position measurement tape extends parallel to the second position measurement tape. This creates an arrangement in which readings taken from the first and second tapes can be easily compared throughout the lengths of the tapes.

When the hoistway is defined as extending "in a vertical direction", it will be understood by the skilled person that this does not require the hoistway to extend precisely vertically i.e. at 90° to the horizontal direction, but rather that the direction in which the hoistway extends is substantially vertically, but may be inclined. For example, a passenger travelling in an elevator car within an inclined hoistway will still be considered to be travelling generally vertically upwards or downwards, even though the elevator car may also travel somewhat in the horizontal direction as it ascends or descends. The first and second position measurement tapes extending "in the vertical direction", and the direction of the tensioning forces in the upwards and downwards "vertical" direction, should be similarly understood as not necessarily following a plumb line in the hoistway. Furthermore, even if the hoistway is not inclined it will be appreciated that the first and second position measurement tapes may extend generally in the vertical direction but at an angle to the true vertical, e.g. an inclined position measurement tape running along the hoistway may also be useful for position referencing any component (such as an elevator car or counterweight) moving along the hoistway.

As described above, the upper and lower tensioning devices could be different and could provide different tensioning forces, provided that the differences between these can be predicted and/or calculated so that position measurements made using each tape can be calibrated. In some embodiments, the tensioning force applied by the upper tensioning device and the lower tensioning device is independent of the elongation of the respective position measurement tape i.e. it is independent of extension or movement of the tensioning device. In some embodiments, the tensioning force applied by the upper tensioning device and the lower tensioning device is substantially constant. This provides a position measurement system in which the tensioning force applied by each tensioning device can be calculated easily and taken into account for calibration purposes. In some embodiments, the tensioning force applied by the upper tensioning device and the lower tensioning device is substantially identical. This may be achieved by the upper tensioning device and the lower tensioning device being substantially identical, but may also be achieved using two different tensioning devices.

In some examples, the upper tensioning device comprises a fixing portion and a tensioning portion, wherein the fixing portion is fixed to a first position within the hoistway and the tensioning portion is connected to the upper end of the first position measurement tape and is moveable relative to the fixing portion so as to apply the tensioning force. This allows the first position measurement tape to be tensioned as a result of movement of the tensioning portion relative to the fixed portion e.g. so as to apply a pulling force on the tape. In some examples the tensioning portion comprises a resilient member (e.g. a spring) connected to the upper end of the first position measurement tape. This provides a simple and low cost tensioning mechanism.

In
some examples the lower tensioning device comprises a fixing portion and a tensioning portion, wherein the fixing portion is fixed to a second position within the hoistway and the tensioning portion is connected to the lower end of the second position measurement tape and is moveable relative to the fixing portion so as to apply the tensioning force. This has the same advantage as described above, with respect to the second position measurement tape. In some examples the tensioning portion comprises a resilient member (e.g. a spring) connected to the lower end of the second position measurement tape. This provides a simple and low cost tensioning mechanism. Alternatively, the lower tensioning device may comprise a weight connected to the lower end of the second position measurement tape and moveable in the downwards vertical direction relative to the hoistway so as to apply the tensioning force to the lower tensioning device. This provides a simple mechanism for applying a tensioning force to the lower end of the second position measurement tape without requiring any fixing within the hoistway. The weight will simply apply a downwards force to the lower end of the position measurement tape due to gravity so as to tension the position measurement tape.

It will be understood by the skilled person that each position measurement tape is suitable for detection by a suitable sensor, wherein the data collected by the sensor is usable e.g. to determine a position of a component within the hoistway. In some examples, the first and/or second position measurement tape comprises distance markings, optionally in the form of a QR code. Such markings are detectable by a sensor and can then be processed e.g. compared to a stored lookup table, to determine a position of a component within the hoistway.

The first and second position measurement tapes described above can be used to measure information relating to the position of any component moving vertically in the hoistway e.g. a counterweight or an elevator working platform. Thus, according to a second aspect of this disclosure, there is provided an elevator system comprising the elevator position reference system as described above, and further comprising:
an elevator component moving along the hoistway in the vertical direction; and
at least one position measurement sensor mounted on the elevator component and arranged to output a first position measurement reading from the first position measurement tape at a first position and a second position measurement reading from the second position measurement tape at the first position.

By taking two independent readings, one of the first position measurement tape and one of the second position measurement tape, at the same first position, redundancy is provided, and furthermore these separate readings can be processed to derive absolute position and/or building settlement information as described further below.

The at least one position measurement sensor could be a single sensor, which takes both the first and second position measurement readings. Alternatively, in some examples the elevator system further comprises:
a first sensor mounted on the elevator component and arranged to output the first position measurement reading; and
a second sensor mounted on the elevator component and arranged to output the second position measurement reading. This arrangement advantageously provides two redundant sensor channels, and allows the sensors to be located apart on different parts of the elevator component, to accommodate various different arrangements of the first and second position measurement tapes.

The at least one position measurement sensor may be any suitable sensor able to establish a position measurement using the position measurement tape. For example, the position measurement sensor may be an image sensor such as a still camera or a video camera, an infra-red (IR) sensor, a magnetic sensor or a radio frequency ID (RFI D) sensor. It will be understood that the position measurement tape will correspondingly include markings which can be read by the particular sensor e.g. magnetic areas or a visible pattern (such as QR codes) or a pattern of RFID tags.

It is advantageous for readings from the position measurement tapes to be possible throughout the travel path of the elevator component i.e. the working length of the hoistway (since the readings can be used to derive absolute position information for the component moving along the hoistway). Thus, in some examples the first position measurement tape and the second position measurement tape extend substantially along the entire working length of the hoistway.

In
some examples the elevator system further comprises a computing device arranged to compare the first and second position measurement readings. For example, the computing device may be arranged to calculate a difference between the first and second position measurement readings. In some examples, the computing device is arranged to calculate an average of the difference, for example by dividing the difference by two. This information can advantageously be used to monitor building settlement or compression e.g. so as to be able to correct for this in future measurement readings. The computing device may transmit the difference and/or the first position measurement reading and the second position measurement reading to a remote server or device. Thus, in some examples, the elevator system further comprises a remote server or a remote computing device, for storing the difference. Alternatively, the computing device which calculates the difference may itself be a remote device or server. This information is then accessible to e.g. maintenance staff, and building owners, to monitor these parameters for preventative maintenance and safety. This data can also provide useful long-term data and allow long-term monitoring of the building and its movement.

In
some examples the elevator system further comprises a computing device arranged to calculate an absolute elevator component position at the first position using the first position measurement reading and the second position measurement reading. In some embodiments, the computing device may be arranged to calculate the absolute elevator component position by taking an average of the first and second position measurement readings. In the examples described above in which the elevator system further comprises a computing device arranged to calculate a difference between the position measurement readings, this may be the same computing device as referred to herein, or may be a second computing device. In some examples, the computing device is arranged to calculate the absolute elevator component position by taking an average of the first position measurement reading and the second position measurement reading e.g. by dividing the sum of the first position measurement reading and the second position measurement reading by two. The average could be taken using at least one digital filter e.g. which performs mathematical operations on a sampled, discrete-time position measurement signal to reduce or enhance certain aspects of that signal. For example, the average could be calculated using a moving average filter, e.g. a simple Low Pass FIR (Finite Impulse Response). Averaging two readings from the first and second position measurement tapes allows a more accurate position of the elevator component to be determined, and in particular allows the effect of thermal elongation to be effectively removed, giving an absolute position measurement value having improved accuracy compared to the use of a single tape. The computing device may transmit the absolute elevator component position and/or the first position measurement reading and the second position measurement reading to a remote server or device and/or an elevator controller. Thus, in some examples, the elevator system further comprises a remote server or a remote computing device, for storing the absolute elevator component position. Alternatively, the computing device which calculates the absolute elevator component position may itself be a remote computing device or server. This information is then accessible to e.g. maintenance staff, and building owners, to monitor these parameters for preventative maintenance and safety. This data can also provide useful long-term data and allow long-term monitoring of the building and its movement.

An important use of a position measurement tape is in determining a vertical position of an elevator car within the hoistway, since this information is critical to the safe and successful functioning of an elevator system. Thus, optionally the elevator component is an elevator car, and the computing device is arranged to calculate an absolute elevator car position at the first position by taking an average of the first and second position measurement readings.

The at least one position measurement sensor is arranged to output the first position measurement reading from the first position measurement tape at the first position and the second position measurement reading from the second position measurement tape at the same first position. The first position measurement reading and the second position measurement reading may be taken at (substantially) the same time. This provides a simple way of ensuring that the readings are taken at the same position, provided that the elevator car (or other moving component) is either stationary or moving at a slow speed, relative to the time-frame over which the two readings are taken.

According to a third aspect of the present disclosure, there is provided a method for monitoring building settlement as claimed in claim 10.

This advantageously allows information indicative of, or related to, building settlement or compression to be determined in a simple manner by taking readings of two position measurement tapes at the same vertical position.

As described above, the first and second position measurement tapes and the upper and lower tensioning devices could be different, provided that the differences between these can be predicted and/or calculated so that position measurements made using each tape can be calibrated. Thus the method may further comprise a tape and/or tensioning force calibration stage, in which position measurements are taken which allow differences, between the first and second position measurement tapes and/or the tensioning forces applied by the upper and lower tensioning devices, to be taken into account e.g. by measuring the magnitude of the tensioning force applied by each tensioning device.

The method includes taking both a first and a second position measurement reading at the first position i.e. taking both readings at the same (vertical) position. These two readings could be separated in time provided that they are taken at the same position, and that they are sufficiently close together in time for no substantial changes e.g. due to thermal elongation, or building settlement, to have caused movement of the position measurement tapes. The first position measurement reading and the second position measurement reading may be taken at (substantially) the same time. This provides a simple way of ensuring that the readings are taken at the same position, provided that the elevator is either stationary or moving at a slow speed, relative to the time-frame over which the two readings are taken. This is particularly advantageous in examples in which the readings are also conveniently used to monitor absolute elevator component position.

The method described above i.e. including taking a reading from each of the tapes, may be repeated at regular intervals. Such repeats (which may be carried out at different positions i.e. not all at the first position) may be separated in time e.g. by minutes, hours, or may be taken on different days, but must be frequent enough to measure differences arising from long term building shifts i.e. settlement. It is advantageous to take the readings often for accuracy and to remove other short term factors affecting the readings.

The method may further comprise calculating an absolute elevator component position at the first position using the first position measurement reading and the second position measurement reading. Calculating the absolute elevator component position at the first position may comprise taking an average of the difference between the first and second position measurement readings. This advantageously provides a normalised value representing both the direction and magnitude of building settlement. The average may be calculated by dividing the difference between the first position measurement reading and the second position measurement reading by two. The average could be taken using at least one digital filter e.g. which performs mathematical operations on a sampled, discrete-time position measurement signal to reduce or enhance certain aspects of that signal. For example, the average could be calculated using a moving average filter, e.g. a simple Low Pass FIR (Finite Impulse Response).

As described above with reference to the elevator system, the first and second position measurement tapes can be used to measure an absolute position of an elevator component at the first position e.g. a counterweight or an elevator working platform. Thus in some examples, the method further comprises determining an average of the first position measurement reading and the second position measurement reading to give an absolute elevator component position at the first position. In some examples, the elevator component is an elevator car, and the method further comprises determining an average of the first position measurement reading and the second position measurement reading to give an absolute elevator car position at the first position. In some examples, the average is calculated by dividing the sum of the first position measurement reading and the second position measurement reading by two.

The calculated "absolute" elevator component position will be understood by the skilled person to be a position which is calibrated with reference to an "absolute" or pre-defined reference system. The position reference system may be calibrated in an initial learning phase e.g. carried out immediately following system installation or maintenance. Thus, in some examples the method further comprises, during an initial learning phase, taking at least one first calibration reading from the first position measurement tape at at least one calibration position using a sensor moving with the elevator component within the hoistway;
taking at least one second calibration reading from the second position measurement tape at at least one calibration position using a sensor moving with the elevator component within the hoistway; and
storing the first and second calibration readings in a memory.

The first calibration readings and the second calibration readings may each be carried out at a series of vertical locations within the hoistway, e.g. at regular locations, and may be carried out at some or all of the same vertical heights for each of the position measurement tapes. The calibration readings are stored e.g. in a lookup table, such that a reading taken later of one of the position measurement tapes can be associated with a particular absolute position (or height) using the data stored in memory e.g. the lookup table.

In
some examples, the method further comprises transmitting at least one of: the first position measurement reading, the second position measurement reading, the difference between the first and second position measurement readings, and the absolute elevator car position, to a remote server. This data is then advantageously accessible e.g. by a maintenance person or building owner or operator, and this also enables the possibility of carrying out calculations e.g. of building settlement remotely or off-site. The transmission may use any suitable wired communication (e.g. CAN or LAN) or wireless transmission method e.g. via WiFi, Bluetooth etc. The provided data may also be useful to a building owner for long-term monitoring of the building e.g. building settlement.

### Detailed description

Some examples of this disclosure will now be described, by way of example only, with reference to the accompanying drawings, in which:
Figure 1 shows a perspective view of an elevator system including a position measurement tape, as is known in the art;
Figure 2 shows a perspective view of an exemplary clip as shown in Figure 1;
Figure 3 shows a perspective view of an elevator system according to an example of the present disclosure;
Figure 4 shows a first example of a tensioning device according to the present disclosure;
Figure 5 shows a second example of a tensioning device according to the present disclosure; and
Figure 6 shows a table representing first and second position measurement readings, and absolute position and difference data derived from those readings, taken on a series of occasions.

Figure 1 shows a perspective view of an elevator system 100 as is known in the art. An elevator car 120 is arranged to move vertically within the hoistway 140, guided along guide rails 160 extending in the vertical direction. The hoistway 140 includes a position measurement tape 180. The position measurement tape 180 is fixed to a hoistway wall by an upper fixing device 110, connected to the upper end of the position measurement tape 180, and a lower fixing device 130, connected to the lower end of the position measurement tape 180. These fixing devices 110, 130 do not allow vertical movement of the respective ends of the position measurement tape 180. The elevator hoistway 140 also includes two guiding clips 150a, 150b. Each guiding clip 150a, 150b is located at a respective landing floor of the elevator system, close to a respective landing door arrangement 170a, 170b.

An exemplary guiding clip 150a as is known in the art is shown in greater detail in Figure 2. The guiding clip 150a includes first and second fixing holes 152a, 152b, which allow the guiding clip 150a to be secured to a structure within the hoistway. In the example of Figure 1 the guiding clips 150a, 150b are fixed to a wall of the hoistway 140, but it is also known to fix such guiding clips 150a, 150b to another structure such as one of the guide rails 160. The guiding clip 150a includes a first protrusion 154 and a second protrusion 156 arranged such that in use they contact opposite edges of the position measurement tape 180. Thus the first protrusion 154 prevents movement of the position measurement tape 180 to the left (as viewed from the perspective of Figure 2) whilst the second protrusion 156 prevents movement of the position measurement tape 180 to the right (also as viewed from the perspective of Figure 2) i.e. in the event of sideways movement of the position measurement tape 180, the tape will come into contact with the first protrusion 154 or the second protrusion 156 (depending on the direction of the movement) and the protrusions 154, 156 will resist further sideways movement of the position measurement tape 180.

The protrusions 154, 156 are bent so as to also pass in front of a front surface (the surface visible in Figure 2) of the position measurement tape 180, and thereby also prevent movement of the position measurement tape 180 in the horizontal direction away from the guiding clip 150a, at least in the region of the first and second protrusion 154, 156. The first and second protrusions 154, 156 are not arranged to apply any pressure onto the front surface of the position measurement tape 180, but simply to come into contact with the position measurement tape 180 if it moves away from the guiding clip 150a so as to resist movement of the position measurement tape 180 away from the guiding clip 150a (and therefore away from the wall of the hoistway or other structure mounting the guiding clip 150a). Since the first and second protrusions 154, 156 do not apply pressure to the front surface of the position measurement tape 180, they do not restrict or hinder vertical movement of the position measurement tape 180 through the guiding clip 150a, as illustrated by the arrow 158. This means that the position measurement tape 180 is free to stretch, shift or sag in the vertical direction, e.g. as a result of temperature fluctuations in the hoistway.

The functioning of the elevator system 100 will now be explained with reference to Figures 1 and 2. The elevator car 120 moves vertically within the hoistway 140, along the guide rails 160, driven by any suitable drive system as is known in the art, and controlled by an elevator system controller (not shown). Although a roped elevator system 100 is illustrated, the system may instead be ropeless. A sensor 190 is mounted to the elevator car 120, in a position which is generally aligned in a horizontal direction with the position measurement tape 180. As the elevator car 120 moves along the hoistway 140 in the vertical direction, the sensor 190 moves up and down to different vertical positions along the position measurement tape 180. This can be used for absolute position monitoring of the elevator car 120.

The sensor 190 senses position markings e.g. increments, on the position measurement tape 180 e.g. using a camera. The sensor 190 can either process the collected data itself or pass the data to another component of the elevator system e.g. the elevator system controller, for further processing. This data is processed to determine a vertical position i.e. height, within the hoistway 140. For example, each position marking could be unique and could be looked up in a lookup table (created in an initial calibration process) which includes the corresponding height for each position marking. In this way the position measurement tape 180 is usable by the elevator system 100 to determine the vertical position of the elevator car 120 for any given position within the hoistway 140.

However, in many elevator systems 100 the height of the hoistway 140, and therefore of the position measurement tape 180, is substantial e.g. in high rise buildings. As with any material, the position measurement tape 180 can undergo thermal expansion as a result of temperature increases in the hoistway 140, and the resulting elongation can be significant (e.g. several mm) for the lengths of position measurement tape which are commonly used. For example, the material of a typical position measurement tape may have a thermal elongation factor of 1.6 × 10⁻⁵ K⁻¹, which would give rise to a total length increase of 32 mm in an elevator system having a total hoistway height of 50 m, and experiencing a temperature rise of 40 °C.

Since the upper and lower ends of the position measurement tape 180 of the prior art elevator system 100 are fixed to the wall of the hoistway 140, elongation of the position measurement tape 180 will create loose slack in the tape, able to freely pass through the guiding clips 150a, 150b. This therefore creates unpredictable changes and anomalies in the relative position of parts/markings of the position measurement tape 180, since the location of any excess length of the tape cannot be accurately predicted. This can therefore result in parts/markings of the position measurement tape moving away from their "standard" or "expected" position (e.g. during calibration), which can then negatively affect position measurements made using the position measurement tape 180.

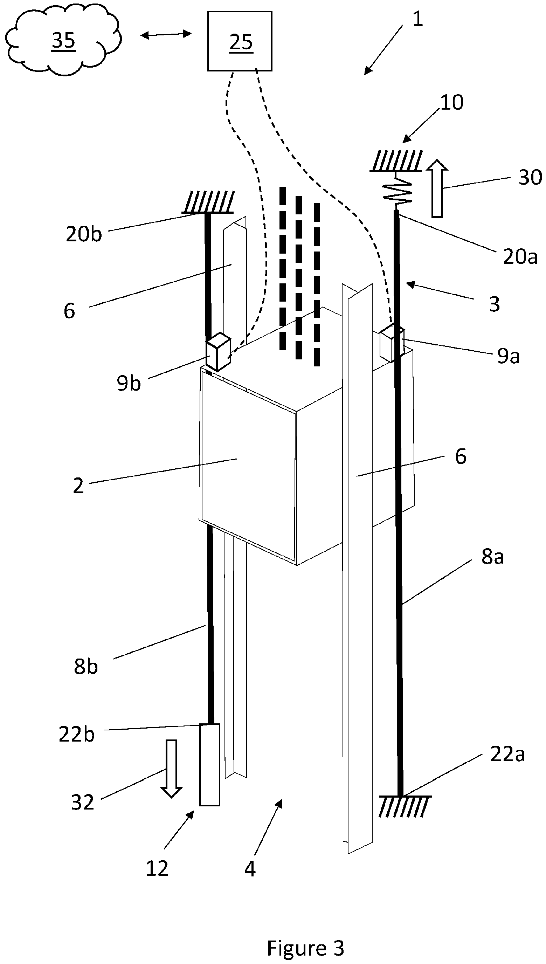

An elevator system according to examples of the present disclosure, as described herein below with reference to Figures 3-6, seeks to address such shortcomings of the prior art elevator system 100.

Figure 3 shows a perspective view of an elevator system 1 according to an example of the present disclosure. An elevator car 2 is arranged to move vertically within a hoistway 4, which extends in the vertical direction as shown. The elevator car 2 is guided along guide rails 6. The hoistway 4 includes a position reference system 3 which includes a first position measurement tape 8a and a second position measurement tape 8b, both shown extending along the same portion of the hoistway 4 in the vertical direction.

The first position measurement tape 8a has an upper end 20a which is connected to an upper tensioning device 10. The position measurement tape 8a also has a lower end 22a which is fixed within the hoistway 4. The upper tensioning device 10 applies an upwards tensioning force 30 to the first position measurement tape 8a in the upwards vertical direction.

The second position measurement tape 8b has a lower end 22b which is connected to a lower tensioning device 12. The second position measurement tape 8b also has an upper end 20b which is fixed within the hoistway 4. The lower tensioning device 12 applies a downwards tensioning force 32 to the second position measurement tape in the downwards vertical direction.

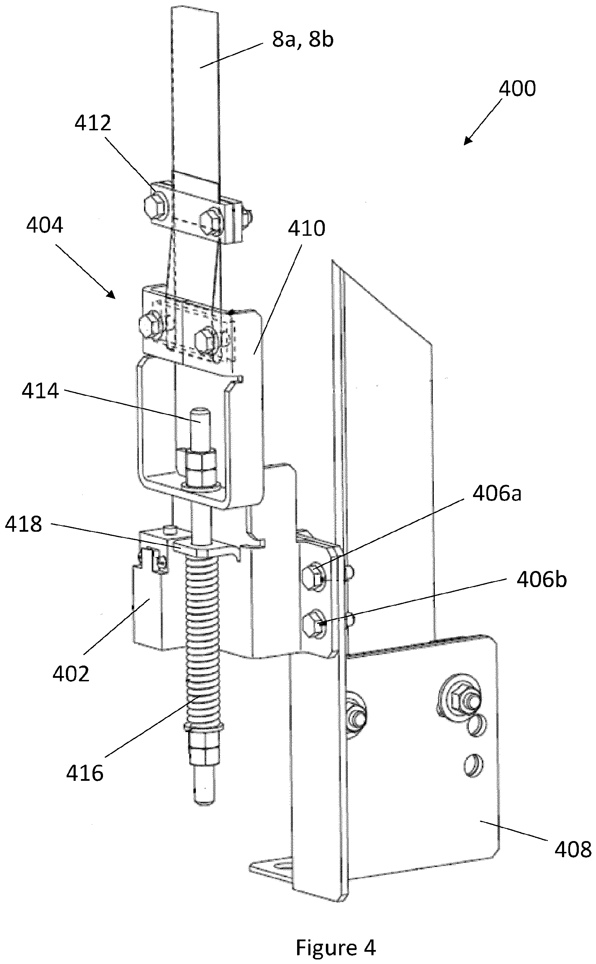

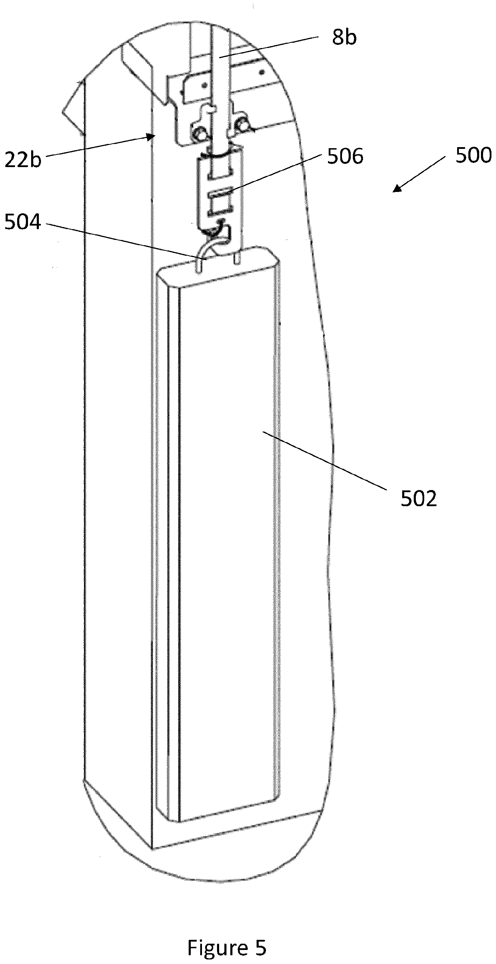

Some exemplary tensioning devices will be described in more detail with reference to Figures 4 and 5.

The elevator hoistway 4 may also include guiding clips (not shown) positioned along the length of each position measurement tape 8a, 8b (e.g. at regular intervals), which are the same as that described above with respect to Figure 2 or similar enough to provide the same function. Such clips can be designed in any suitable way to allow for any vertical movement of the position measurement tapes 8a, 8b as a result of the tensioning forces 30, 32.

During operation of the elevator system 1, the elevator car 2 moves vertically within the hoistway 4, along the guide rails 6, driven by any suitable drive system as is known in the art, and controlled by an elevator system controller (not shown). Two sensors 9a, 9b are mounted to the elevator car 2. The first sensor 9a is in a position which is generally aligned in a horizontal direction with the first position measurement tape 8a. The second sensor 9b is in a position which is generally aligned in a horizontal direction with the second position measurement tape 8b. It will be understood that in other examples the position measurement tapes 8a, 8b may be located sufficiently close to each other that only a single sensor, or two sensors mounted next to one another, can sense the position measurement tapes 8a, 8b. For example, the two position measurement tapes 8a, 8b could instead be arranged on the same wall of the hoistway 4 rather than on opposite walls as shown. The sensors 9a, 9b may be mounted to the elevator car 2 using any suitable known arrangement.

Each sensor 9a, 9b senses position markings e.g. increments, on the respective first and second position measurement tapes 8a, 8b e.g. using a camera. The sensors 9a, 9b can either process the collected data themselves or pass the data to another component of the elevator system, e.g. a computing device 25 which may be part of the elevator system controller, for further processing.

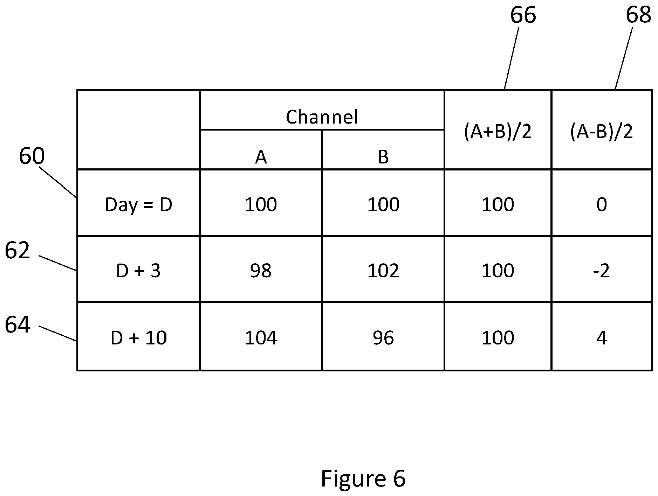

This data is processed to determine a position, i.e. height, within the hoistway 4, and/or to determine building settlement information, as is described in greater detail below with reference to Figure 6. Each position marking could be unique and could be looked up in a lookup table which includes the corresponding height for each position marking. In this way, each or both of the position measurement tapes 8a, 8b are usable by the elevator system 1 to determine the vertical position of the elevator car 2 for any given position within the hoistway 4. As described further below, a comparison of the position readings from the two position measurement tapes 8a, 8b can be used in addition, or alternatively, to determine information related to building settlement.

One, or each, of the sensors 9a, 9b may process position readings itself, or alternatively, the position readings may be transmitted to the computing device 25. The computing device 25 may be a part of any suitable component of the elevator system 1 e.g. an elevator controller, and may be located remotely from the rest of the elevator system 1. The connection of the computing device 25 to the sensors 9a, 9b may be physical i.e. wired, or wireless, and is represented only schematically by dashed lines in Figure 3.

The computing device 25 may be arranged to calculate a difference between first and second position measurement readings, collected respectively by the first and second position sensors 9a, 9b from the first and second position measurement tapes 8a, 8b. The computing device 25 may be arranged to calculate an absolute elevator car position by taking an average of the first and second position measurement readings. The computing device 25 may then transmit the difference and/or the absolute elevator car position to a remote (e.g. cloud) server 35 as shown in Figure 3.

In other examples, the computing device 25 (or the sensors 9a, 9b) may send the collected first and second position readings directly to the remote server 35. The remote server 35 may then calculate the difference and/or absolute elevator car position as described below.

The upper tensioning device 10 applies an upwards tensioning force 30, illustrated by upwards arrow. Since the lower end 22a of the first position measurement tape 8a is fixed in the hoistway 4, this upwards tensioning force 30 keeps the first position measurement tape 8a taut, so any elongation resulting from thermal expansion results in the position measurement tape 8a being pulled upwards by the tensioning device 10, but remaining taut along its length.

Similarly, the lower tensioning device 12 applies a downwards tensioning force 32, illustrated by downwards arrow. Since the upper end 20b of the second position measurement tape 8b is fixed in the hoistway 4, this upwards tensioning force 32 keeps the second position measurement tape 8b taut, so any elongation resulting from thermal expansion results in the position measurement tape 8b being pulled downwards by the tensioning device 12, but remaining taut along its length.

Therefore any thermal elongation (or contraction) of the tapes will result in an approximately equal magnitude of length change in each of the position measurement tapes 8a, 8b, but they will be "shifted" or extended slightly, in opposite directions, due to the opposite tensioning forces 30, 32 acting on the tapes 8a, 8b.

Figure 4 shows a first exemplary tensioning device 400. This could be used as an upper tensioning device 10 or a lower tensioning device 12 as seen in Figure 3. The tensioning device 400 has a fixing portion 402 and a tensioning portion 404. The fixing portion 402 in this example is in the form of a bracket which includes two holes 406a, 406b, through which fixing members (which in this example are bolts) can be passed to attach the fixing portion to a structure 408 within the hoistway 4, to fix the fixing portion 402 relative to the hoistway 4. The structure 408 may, for example, be a second bracket which is itself attached e.g. bolted, to a wall or to a guide rail. The fixing portion 402 also includes a tensioning plate 418, described further below.

The tensioning portion 404 is connected to an end of the position measurement tape 8a, 8b (which could be the upper end 20a of the first position measurement tape 8a or the lower end 22b of the second position measurement tape 8b) and is moveable relative to the fixing portion 402 so as to apply the tensioning force 30, 32 to the position measurement tape 8a, 8b. Specifically, the end of the position measurement tape 8a, 8b is looped around a first end of a tensioning bracket 410, and this tape end is then looped back to lie against the position measurement tape 8a, 8b. The end of the position measurement tape 8a, 8b is fixed in position relative to the rest of the position measurement tape 8a, 8b by a clamping mechanism 412, in which plates are arranged with the position measurement tape 8a, 8b and its end between the plates, and then fixed in opposing contact by the clamping mechanism 412. The other end of the tensioning bracket 410 is fixed on a rod 414. A resilient member 416, which in this example is a spring, is arranged on the rod 414, at the end which is further from the mounting bracket 414. The resilient member 416 is braced against the tensioning plate 418 of the fixing portion 402. The tensioning plate 418 includes a hole sized so that the rod 414 passes through the hole, but the resilient member 416 does not. Thus the rod 414 is able to slide through the hole, relative to the tensioning plate 418 which remains fixed relative to the hoistway 4 (since it is part of the fixing portion 402).

When the position measurement tape 8a, 8b is installed, the resilient member 416 is pre-compressed, so that the resilient member 416 is acting to try to expand, and therefore pushing against the tensioning plate 418 (which resists since it is fixed), causing a pull on the tensioning bracket 410, downwards (with respect to the view of Figure 4) so as to apply tension to the position measurement tape 8a, 8b. If the position measurement tape 8a, 8b elongates due to thermal expansion then this will allow the resilient member 416 to expand slightly, moving the tension bracket 410 upwards (for tensioning device 10 of Figure 3) or downwards (for tensioning device 12 of Figure 3) and ensuring that the position measurement tape 8a, 8b is kept taut. Similarly, a reduction in length will apply a greater upwards or downwards force and re-compress the resilient member 416.

Figure 5 shows a second exemplary tensioning device 500. This could be used as a lower tensioning device 12 for the position measurement tape 8b as seen in Figure 3. The tensioning device 500 includes a weight 502. The weight includes a hook 504, to which a connection member 506 is attached. The lower end 22b of the position measurement tape 8b is also attached to the connection member 506. Gravity acts on the weight 502 to produce a downwards force which the position measurement tape 8b resists with its material strength i.e. resisting stretching of the position measurement tape 8b. The force produced by the weight 502 acts to tension the position measurement tape 8b, such that if the position measurement tape 8b elongates due to thermal expansion the end 22b of the position measurement tape 8b, and therefore the connection member 506 and the weight 502 to which it is connected will be able to move further downwards relative to the hoistway 4 under the force of gravity, therefore keeping the position measurement tape 8b under tension. The weight 502 provides a tensioning mechanism which does not need to be fixed in the hoistway 4 (and in fact works as a result of movement of the tensioning device 500 relative to the hoistway 4).

The functioning of the elevator position reference system of the elevator system 1 will now be described with reference to Figures 3 and 6.

During operation of the elevator system 1, the elevator car 2 moves vertically within the hoistway 4, along the guide rails 6. When the elevator car 2 stops or passes a particular position, which can be any vertical position i.e. height, in which both the first and second position measurement tapes 8a, 8b are present, the first sensor 9a and the second sensor 9b can take independent readings from the first position measurement tape 8a and the second position measurement tape 8b, respectively. These position readings can be carried out, as described above, for example by comparing a detected marking or other visible identifier, with a look-up table to give a position value.

An example of such position readings is shown in row 60 of Figure 6. The column "Channel" indicates whether the reading is taken using the first sensor 9a detecting the first position measurement tape 8a (indicated as column "A"), or whether the reading is taken using the second sensor 9b detecting the second position measurement tape 8b (indicated as column "B").

The readings in row 60 are taken on a first day, designated as day "D". This may be a day on which system installation is completed and on which an initial learning phase is carried out. In the learning phase, the elevator car 2 is run up and/or down the hoistway 4 and position readings are taken at a number of positions of both the first and second position measurement tapes 8a, 8b, and recorded in a memory. Each position is recorded as corresponding to a particular calibrated, or absolute, position.

In this example, the first readings give a position of "100" (in arbitrary units) for the readings from both of the position measurement tapes 8a, 8b. The absolute elevator car position calculated from these readings is shown in column 66, and as represented in the column heading, is calculated by summing the readings derived from each tape, and dividing the total by two, i.e. an average of the two independent position readings. As discussed below, this can be a more accurate absolute position measurement than would be achieved using a single (possibly non-tensioned) position measurement tape.

The next column, 68, shows the averaged shift parameter. The averaged shift parameter is calculated by subtracting the second position measurement tape reading from the first position measurement tape reading, and dividing the total by two. This information represents the relative magnitude and direction of thermal elongation and/or building settlement. As shown in the table of Figure 6, on day D both tapes read the same position value and their relative shift from the calibrated position is 0.

The position measurement is then repeated, at the same position, three days later, represented as "D + 3" in row 62. As seen, on this day, the first sensor 9a takes a reading of "98" on the first position measurement tape 8a, rather than the previous reading of "100". Assuming the position "values" are counted from the bottom of the hoistway 4, this means that the first position measurement tape 8a has shifted upwards, relative to day D, since the sensor 9a at the same position has read a lower value. Conversely, sensor 9b reads a value of "102" from the second position measurement tape 8b, showing this tape has shifted downwards.

As shown in column 66, the average of these two readings still gives the same absolute position value of "100" which is consistent with day D. Thus combining the values from these two oppositely tensioned tapes allows thermal elongation effects to be removed from an absolute position measurement, for improved accuracy.

On day D + 3, the averaged shift parameter is -2, representing the direction of shift (i.e. first position measurement tape 8a shifted upwards, and second position measurement tape 8b shifted downwards), and also the relative magnitude.

The position measurement is then repeated again, at the same position, a further seven days later, so ten days after initial day D, represented as "D + 10" in row 64. As seen, on this day, the first sensor 9a takes a reading of "104" on the first position measurement tape 8a, rather than the day D reading of "100". Assuming the position "values" are counted from the bottom of the hoistway 4, this means that the first position measurement tape 8a has shifted downwards, relative to day D + 3 and day D, since the sensor 9a at the same position has read a higher value. Conversely, sensor 9b reads a value of "96" from the second position measurement tape 8b, showing this tape has shifted upwards.

As shown in column 66, the average of these two readings still gives the same absolute position value of "100" which is consistent with day D and day D + 3. Thus combining the values from these two oppositely tensioned tapes allows thermal elongation effects to be removed from an absolute position measurement, for improved accuracy.

On day D + 10, the averaged shift parameter is 4 (as seen in column 68), representing the direction of shift (i.e. first position measurement tape 8a shifted downwards, and second position measurement tape 8b shifted upwards, which is the opposite of day D + 3), and also the relative magnitude (twice as much shift as on day D + 3). This shift parameter is indicative both of relative movements due to thermal elongation, and also of relative movements resulting from building settlement i.e. movement of the building.

As described above, some or all of the information represented in each of the rows 60, 62, 64 of Figure 6 may be transmitted to a remote server 35 (which may be e.g. an Ethernet server). The information on the server 35 is then accessible, by a customer, building owner, building manager, maintenance person etc. for building and maintenance monitoring. This also allows long term building settlement to be monitored e.g. by sending the shift parameter values from column 68, and monitoring these over time.

While the examples discussed above relate to an elevator car 2 being used to take readings from a pair of position measurement tapes 8a, 8b arranged in the hoistway 4, it will be appreciated that the sensors 9a, 9b may be mounted to any elevator component moving along the hoistway 4 in the vertical direction, such as a counterweight or working platform. In at least some examples, the readings may be taken for the purpose of monitoring building settlement without being used to monitor the position of the elevator car 2.

It will be appreciated by those skilled in the art that the disclosure has been illustrated by describing one or more specific aspects thereof, but is not limited to these aspects; many variations and modifications are possible within the scope of the accompanying claims.

## Claims

1. An elevator position reference system (3), comprising:
a hoistway (4) extending in a vertical direction;
a first position measurement tape (8a) arranged in the hoistway (4) to extend along a portion of the hoistway (4) in the vertical direction;
a second position measurement tape (8b) arranged in the hoistway (4) to extend along at least some of said portion of the hoistway (4) in the vertical direction;
a lower tensioning device (12), connected to a lower end (22b) of the second position measurement tape (8b) so as to apply a tensioning force (32) to the second position measurement tape (8b) in the downwards vertical direction, wherein an upper end (20b) of the second position measurement tape (8b) is fixed within the hoistway (4); and
**characterized by** further comprising an upper tensioning device (10), connected to an upper end (20a) of the first position measurement tape (8a) so as to apply a tensioning force (30) to the first position measurement tape (8a) in the upwards vertical direction, wherein a lower end (22a) of the first position measurement tape (8a) is fixed within the hoistway (4).

2. The elevator position reference system (3) of claim 1, wherein:
the upper tensioning device (10) comprises a fixing portion (402) and a tensioning portion (404), wherein the fixing portion (402) is fixed to a first position within the hoistway (4) and the tensioning portion (404) is connected to the upper end (20a) of the first position measurement tape (8a) and is moveable relative to the fixing portion (402) so as to apply the tensioning force (30); and/or
the lower tensioning device (12) comprises a fixing portion (402) and a tensioning portion (404), wherein the fixing portion (402) is fixed to a second position within the hoistway (4) and the tensioning portion (404) is connected to the lower end (22b) of the second position measurement tape (8b) and is moveable relative to the fixing portion (402) so as to apply the tensioning force (32).

3. The elevator position reference system (3) of claim 2, wherein the tensioning portion (404) comprises a resilient member (416).

4. The elevator position reference system (3) of claim 1, wherein the lower tensioning device (12) comprises a weight (502) connected to the lower end (22b) of the second position measurement tape (8b) and moveable in the downwards vertical direction relative to the hoistway (4) so as to apply the tensioning force (32).

5. The elevator position reference system (3) of any preceding claim, wherein the first position measurement tape (8a) and the second position measurement tape (8b) are arranged along the same wall of the hoistway (4).

6. The elevator position reference system (3) of any preceding claim, wherein for the majority of the at least some of said portion of the hoistway (4), along which both the first and second position measurement tapes (8a, 8b) extend, the first position measurement tape (8a) and the second position measurement tape (8b) are less than 1m apart, optionally less than 50cm, further optionally less than 10cm, further optionally less than 5cm.

7. An elevator system (1) comprising the elevator position reference system (3) of any of claims 1-6, and further comprising:
an elevator component (2) moving along the hoistway (4) in the vertical direction; and
at least one position measurement sensor (9a, 9b) mounted on the elevator component (2) and arranged to output a first position measurement reading from the first position measurement tape (8a) at a first position and a second position measurement reading from the second position measurement tape (8b) at the first position.

8. The elevator system (1) of claim 7, further comprising a computing device (25) arranged to calculate a difference between the first and second position measurement readings.

9. The elevator system (1) of claim 7 or 8, wherein the elevator component (2) is an elevator car (2), and further comprising a computing device (25) arranged to calculate an absolute elevator car position at the first position using the first and second position measurement readings.

10. A method for monitoring building settlement using an elevator position reference system (3) comprising a first position measurement tape (8a) arranged in a hoistway (4) to extend along a portion of the hoistway (4) in the vertical direction and a second position measurement tape (8b) arranged in the hoistway (4) to extend along at least some of said portion of the hoistway (4) in the vertical direction, an upper tensioning device (10), connected to an upper end (20a) of the first position measurement tape (8a) so as to apply a tensioning force (30) to the first position measurement tape (8a) in the upwards vertical direction, wherein a lower end (22a) of the first position measurement tape is fixed within the hoistway (4), and a lower tensioning device (12), connected to a lower end (22b) of the second position measurement tape (8b) so as to apply a tensioning force (32) to the second position measurement tape (8b) in the downwards vertical direction, wherein an upper end (20b) of the second position measurement tape (8b) is fixed within the hoistway (4); the method comprising:
taking a first position measurement reading from the first position measurement tape (8a) at a first position using a sensor (9a) moving with an elevator component (2) in the vertical direction;
taking a second position measurement reading from the second position measurement tape (8b) at the first position using a sensor (9b) moving with the elevator component (2) in the vertical direction; and
determining a difference between the first and second position measurement readings.

11. The method of claim 10, wherein the first position measurement reading and the second position measurement reading are taken at the same time.

12. The method of claim 10 or 11, wherein the elevator component is an elevator car (2), and further comprising:
determining an absolute elevator car position at the first position using the first position measurement reading and the second position measurement reading.

13. The method of any of claims 10 to 12, further comprising, during an initial learning phase, taking at least one first calibration reading from the first position measurement tape (8a) at at least one calibration position using a sensor (9a) moving with the elevator component (2) within the hoistway (4);
taking at least one second calibration reading from the second position measurement tape (8b) at at least one calibration position using a sensor (9b) moving with the elevator component (2) within the hoistway; and
storing the first and second calibration readings in a memory.

14. The method of any of claims 10 to 13, further comprising transmitting at least one of: the first position measurement reading, the second position measurement reading, the difference between the first and second position measurement readings, and the absolute elevator car position, to a remote server (35).

## Patentansprüche

1. Aufzugspositionreferenzsystem (3), umfassend:
einen Schacht (4), der sich in vertikaler Richtung erstreckt; ein erstes Positionsmessband (8a), das in dem Schacht (4) angeordnet ist, um sich entlang eines Abschnitts des Schachts (4) in vertikaler Richtung zu erstrecken;
ein zweites Positionsmessband (8b), das in dem Schacht (4) angeordnet ist, um sich mindestens entlang eines Teils des Abschnitts des Schachts (4) in vertikaler Richtung zu erstrecken; eine untere Spannvorrichtung (12), die mit einem unteren Ende (22b) des zweiten Positionsmessbands (8b) verbunden ist, um eine Spannkraft (32) in der vertikalen Richtung nach unten auf das zweite Positionsmessband (8b) auszuüben, wobei ein oberes Ende (20b) des zweiten Positionsmessbands (8b) in dem Schacht (4) befestigt ist; und
**dadurch gekennzeichnet, dass** es ferner eine obere Spannvorrichtung (10) umfasst, die mit einem oberen Ende (20a) des ersten Positionsmessbands (8a) verbunden ist, um eine Spannkraft (30) in der vertikalen Richtung nach oben auf das erste Positionsmessband (8a) auszuüben, wobei ein unteres Ende (22a) des ersten Positionsmessbands (8a) in dem Schacht (4) befestigt ist.

2. Aufzugspositionreferenzsystem (3) nach Anspruch 1, wobei:
die obere Spannvorrichtung (10) einen Befestigungsabschnitt (402) und einen Spannabschnitt (404) umfasst, wobei der Befestigungsabschnitt (402) an einer ersten Position innerhalb des Schachts (4) befestigt ist und der Spannabschnitt (404) mit dem oberen Ende (20a) des ersten Positionsmessbands (8a) verbunden ist und relativ zu dem Befestigungsabschnitt (402) beweglich ist, um die Spannkraft (30) auszuüben; und/oder
die untere Spannvorrichtung (12) einen Befestigungsabschnitt (402) und einen Spannabschnitt (404) umfasst, wobei der Befestigungsabschnitt (402) an einer zweiten Position innerhalb des Schachts (4) befestigt ist und der Spannabschnitt (404) mit dem unteren Ende (22b) des zweiten Positionsmessbands (8b) verbunden ist und relativ zu dem Befestigungsabschnitt (402) beweglich ist, um die Spannkraft (32) auszuüben.

3. Aufzugspositionreferenzsystem (3) nach Anspruch 2, wobei der Spannabschnitt (404) ein elastisches Element (416) umfasst.

4. Aufzugspositionreferenzsystem (3) nach Anspruch 1, wobei die untere Spannvorrichtung (12) ein Gewicht (502) umfasst, das mit dem unteren Ende (22b) des zweiten Positionsmessbands (8b) verbunden ist und nach unten in vertikaler Richtung relativ zu dem Schacht (4) beweglich ist, um die Spannkraft (32) auszuüben.

5. Aufzugspositionreferenzsystem (3) nach einem der vorhergehenden Ansprüche, wobei das erste Positionsmessband (8a) und das zweite Positionsmessband (8b) entlang derselben Wand des Schachts (4) angeordnet sind.

6. Aufzugspositionreferenzsystem (3) nach einem der vorhergehenden Ansprüche, wobei sich für den Großteil des mindestens eines Teils des Abschnitts des Schachts (4), entlang dessen sich sowohl das erste als auch das zweite Positionsmessband (8a, 8b) erstrecken, das erste Positionsmessband (8a) und das zweite Positionsmessband (8b) weniger als 1 m, optional weniger als 50 cm, ferner optional weniger als 10 cm, ferner optional weniger als 5 cm voneinander entfernt sind.

7. Aufzugsystem (1), umfassend das Aufzugspositionreferenzsystem (3) nach einem der Ansprüche 1-6 und ferner umfassend:
eine Aufzugkomponente (2), die sich entlang des Schachts (4) in vertikaler Richtung bewegt; und
mindestens einen Positionsmesssensor (9a, 9b), der an der Aufzugkomponente (2) montiert und angeordnet ist, um einen ersten Positionsmesswert von dem ersten Positionsmessband (8a) an einer ersten Position und einen zweiten Positionsmesswert von dem zweiten Positionsmessband (8b) an der ersten Position auszugeben.

8. Aufzugsystem (1) nach Anspruch 7, ferner umfassend eine Rechenvorrichtung (25), die angeordnet ist, um eine Differenz zwischen den ersten und zweiten Positionsmesswerten zu berechnen.

9. Aufzugsystem (1) nach Anspruch 7 oder 8, wobei die Aufzugkomponente (2) eine Aufzugkabine (2) ist, und ferner umfassend eine Rechenvorrichtung (25), die angeordnet ist, um eine absolute Aufzugskabinenposition an der ersten Position unter Verwendung der ersten und zweiten Positionsmesswerte zu berechnen.

10. Verfahren zum Überwachen von Gebäudeabrechnungen unter Verwendung eines Aufzugspositionreferenzsystems (3), umfassend ein erstes Positionsmessband (8a), das in einem Schacht (4) angeordnet ist, um sich entlang eines Abschnitts des Schachts (4) in vertikaler Richtung zu erstrecken und ein zweites Positionsmessband (8b), das in dem Schacht (4) angeordnet ist, um sich mindestens entlang eines Teils des Abschnitts des Schachts (4) in vertikaler Richtung zu erstrecken, eine obere Spannvorrichtung (10), die mit einem oberen Ende (20a) des ersten Positionsmessbands (8a) verbunden ist, um eine Spannkraft (30) in der vertikalen Richtung nach oben auf das erste Positionsmessband (8a) auszuüben, wobei ein unteres Ende (22a) des ersten Positionsmessbands in dem Schacht (4) befestigt ist, und eine untere Spannvorrichtung (12), die mit einem unteren Ende (22b) des zweiten Positionsmessbands (8b) verbunden ist, um eine Spannkraft (32) in der vertikalen Richtung nach unten auf das zweite Positionsmessband (8b) auszuüben, wobei ein oberes Ende (20b) des zweiten Positionsmessbands (8b) in dem Schacht (4) befestigt ist; das Verfahren umfassend:
Erfassen eines ersten Positionsmesswerts von dem ersten Positionsmessband (8a) an einer ersten Position unter Verwendung eines Sensors (9a), der sich mit einer Aufzugkomponente (2) in der vertikalen Richtung bewegt;
Erfassen eines zweiten Positionsmesswerts von dem zweiten Positionsmessband (8b) an der ersten Position unter Verwendung eines Sensors (9b), der sich mit der Aufzugkomponente (2) in der vertikalen Richtung bewegt; und
Bestimmen einer Differenz zwischen den ersten und zweiten Positionsmesswerten.

11. Verfahren nach Anspruch 10, wobei der erste Positionsmesswert und der zweite Positionsmesswert gleichzeitig erfasst werden.

12. Verfahren nach Anspruch 10 oder 11, wobei die Aufzugkomponente eine Aufzugkabine (2) ist und ferner umfassend: Bestimmen einer absoluten Aufzugskabinenposition an der ersten Position unter Verwendung des ersten Positionsmesswerts und des zweiten Positionsmesswerts.

13. Verfahren nach einem der Ansprüche 10 bis 12, ferner umfassend während einer anfänglichen Lernphase das Erfassen mindestens einer ersten Kalibrierungsablesung von dem ersten Positionsmessband (8a) an mindestens einer Kalibrierungsposition unter Verwendung eines Sensors (9a), der sich mit der Aufzugkomponente (2) innerhalb des Schachts (4) mitbewegt;
Erfassen mindestens einer zweiten Kalibrierungsablesung von dem zweiten Positionsmessband (8b) an mindestens einer Kalibrierungsposition unter Verwendung eines Sensors (9b), der sich mit der Aufzugkomponente (2) innerhalb des Schachts mitbewegt; und
Speichern der ersten und zweiten Kalibrierungsablesungen in einem Speicher.

14. Verfahren nach einem der Ansprüche 10 bis 13, ferner umfassend Übertragen von mindestens eines von Folgendem: dem ersten Positionsmesswert, dem zweiten Positionsmesswert, der Differenz zwischen dem ersten und dem zweiten Positionsmesswert und der absoluten Aufzugskabinenposition zu einem Remote-Server (35) .

## Revendications

1. Système de référence de position d'ascenseur (3), comprenant :
une cage (4) s'étendant dans une direction verticale ;
un premier ruban de mesure de position (8a) agencé dans la cage (4) pour s'étendre le long d'une partie de la cage (4) dans la direction verticale ;
un second ruban de mesure de position (8b) agencé dans la cage (4) pour s'étendre le long d'au moins une partie de ladite partie de la cage (4) dans la direction verticale ;
un dispositif de tension inférieur (12), relié à une extrémité inférieure (22b) du second ruban de mesure de position (8b) de manière à appliquer une force de tension (32) au second ruban de mesure de position (8b) dans la direction verticale vers le bas, dans lequel une extrémité supérieure (20b) du second ruban de mesure de position (8b) est fixée à l'intérieur de la cage (4) ; et
**caractérisé en ce que** le système comprend en outre un dispositif de tension supérieur (10), relié à une extrémité supérieure (20a) du premier ruban de mesure de position (8a) de manière à appliquer une force de tension (30) au premier ruban de mesure de position (8a) dans la direction verticale vers le haut, dans lequel une extrémité inférieure (22a) du premier ruban de mesure de position (8a) est fixée à l'intérieur de la cage (4).

2. Système de référence de position d'ascenseur (3) selon la revendication 1, dans lequel :
le dispositif de tension supérieur (10) comprend une partie de fixation (402) et une partie de tension (404), dans lequel la partie de fixation (402) est fixée à une première position à l'intérieur de la cage (4) et la partie de tension (404) est reliée à l'extrémité supérieure (20a) du premier ruban de mesure de position (8a) et est mobile par rapport à la partie de fixation (402) de manière à appliquer la force de tension (30) ; et/ou
le dispositif de tension inférieur (12) comprend une partie de fixation (402) et une partie de tension (404), dans lequel la partie de fixation (402) est fixée à une seconde position à l'intérieur de la cage (4) et la partie de tension (404) est reliée à l'extrémité inférieure (22b) du second ruban de mesure de position (8b) et est mobile par rapport à la partie de fixation (402) de manière à appliquer la force de tension (32).

3. Système de référence de position d'ascenseur (3) selon la revendication 2, dans lequel la partie de tension (404) comprend un élément élastique (416).

4. Système de référence de position d'ascenseur (3) selon la revendication 1, dans lequel le dispositif de tension inférieur (12) comprend un poids (502) relié à l'extrémité inférieure (22b) du second ruban de mesure de position (8b) et mobile dans la direction verticale vers le bas par rapport à la cage (4) de manière à appliquer la force de tension (32).

5. Système de référence de position d'ascenseur (3) selon une quelconque revendication précédente, dans lequel le premier ruban de mesure de position (8a) et le second ruban de mesure de position (8b) sont agencés le long de la même paroi à la cage (4) .

6. Système de référence de position d'ascenseur (3) selon une quelconque revendication précédente, dans lequel pour la majorité de l'au moins une partie de ladite partie de la cage (4), le long de laquelle s'étend à la fois les premier et second rubans de mesure de position (8a, 8b), le premier ruban de mesure de position (8a) et le second ruban de mesure de position (8b) sont espacés de moins de 1 m, éventuellement de moins de 50 cm, en outre éventuellement de moins de 10 cm, en outre éventuellement de moins de 5 cm.

7. Système d'ascenseur (1) comprenant le système de référence de position d'ascenseur (3) selon l'une quelconque des revendications 1 à 6, et comprenant en outre :
un composant d'ascenseur (2) se déplaçant le long de la cage (4) dans la direction verticale ; et
au moins un capteur de mesure de position (9a, 9b) monté sur le composant d'ascenseur (2) et agencé pour émettre une première lecture de mesure de position à partir du premier ruban de mesure de position (8a) à une première position et une seconde lecture de mesure de position à partir du second ruban de mesure de position (8b) à la première position.

8. Système d'ascenseur (1) selon la revendication 7, comprenant en outre un dispositif informatique (25) agencé pour calculer une différence entre les première et seconde lectures de mesure de position.

9. Système d'ascenseur (1) selon la revendication 7 ou 8, dans lequel le composant d'ascenseur (2) est une cabine d'ascenseur (2), et comprenant en outre un dispositif informatique (25) agencé pour calculer une position absolue de cabine d'ascenseur à la première position à l'aide des première et seconde lectures de mesure de position.

10. Procédé de surveillance d'affaissement de bâtiments à l'aide d'un système de référence de position d'ascenseur (3) comprenant un premier ruban de mesure de position (8a) agencé dans une cage (4) pour s'étendre le long d'une partie de la cage (4) dans la direction verticale et un second ruban de mesure de position (8b) agencé dans la cage (4) pour s'étendre au moins sur une partie de ladite partie de la cage (4) dans la direction verticale, un dispositif de tension supérieur (10), relié à une extrémité supérieure (20a) du premier ruban de mesure de position (8a) de manière à appliquer une force de tension (30) au premier ruban de mesure de position (8a) dans la direction verticale vers le haut, dans lequel une extrémité inférieure (22a) du premier ruban de mesure de position est fixée à l'intérieur de la cage (4), et un dispositif de tension inférieur (12), relié à une extrémité inférieure (22b) du second ruban de mesure de position (8b) de manière à appliquer une force de tension (32) au second ruban de mesure de position (8b) dans la direction verticale vers le bas, dans lequel une extrémité supérieure (20b) du second ruban de mesure de position (8b) est fixée à l'intérieur de la cage (4) ; le procédé comprenant :
la prise d'une lecture de mesure d'une première position à partir du premier ruban de mesure de position (8a) à une première position à l'aide d'un capteur (9a) se déplaçant avec un composant d'ascenseur (2) dans la direction verticale ;
la prise d'une lecture de mesure d'une seconde position à partir du second ruban de mesure de position (8b) à une première position à l'aide d'un capteur (9b) se déplaçant avec un composant d'ascenseur (2) dans la direction verticale ; et
la détermination d'une différence entre les première et seconde lectures de mesure de position.

11. Procédé selon la revendication 10, dans lequel la première lecture de mesure de position et la seconde lecture de mesure de position sont prises en même temps.

12. Procédé selon la revendication 10 ou 11, dans lequel le composant d'ascenseur est une cabine d'ascenseur (2), et comprenant en outre :
la détermination d'une position absolue de cabine d'ascenseur à la première position à l'aide de la première lecture de mesure de position et de la seconde lecture de mesure de position.

13. Procédé selon l'une quelconque des revendications 10 à 12, comprenant en outre, pendant une phase d'apprentissage initiale, la prise d'au moins une première lecture d'étalonnage à partir du premier ruban de mesure de position (8a) à au moins une position d'étalonnage à l'aide d'un capteur (9a) se déplaçant avec le composant d'ascenseur (2) à l'intérieur de la cage (4) ; la prise d'au moins une seconde lecture d'étalonnage à partir du second ruban de mesure de position (8b) à au moins une position d'étalonnage à l'aide d'un capteur (9b) se déplaçant avec un composant d'ascenseur (2) dans la direction verticale ; et
le stockage des première et seconde lectures d'étalonnage dans une mémoire.

14. Procédé selon l'une quelconque des revendications 10 à 13, comprenant en outre la transmission d'au moins l'une parmi : la première lecture de mesure de position, la seconde lecture de mesure de position, la différence entre les première et seconde lectures de mesure de position, et la position absolue de la cabine d'ascenseur, à un serveur distant (35).
